# EUROPEAN PATENT APPLICATION

(11) **EP 4 468 769 A1**
(43) Date of publication of application: **27.11.2024**
(21) Application number: 22921729.4
(22) Date of filing: 24.12.2022
(51) Int. Cl.: H04W 16/26

(54) **COMMUNICATION METHOD AND APPARATUS**

(30) Priority: 19.01.2022 CN 202210059103
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN)
(74) Representative: Körber, Martin Hans
(86) International application number: PCT/CN2022/141705
(87) International publication number: WO 2023/138308

(57) **Abstract**

This application provides a communication method and apparatus. The method includes: A first node receives a beam set and first indication information from a second node, where the beam set includes at least one beam. The first node determines, based on the first indication information, identification information of at least one beam that needs to be forwarded by the first node in the beam set. The first node forwards, based on the identification information of the at least one beam that needs to be forwarded by the first node in the beam set and receiving time information of the at least one beam that needs to be forwarded by the first node, the at least one beam that needs to be forwarded by the first node. The method is applied to a smart repeater (smart repeater), to implement smart beam forwarding by the repeater.

## Description

This application claims priority to Chinese Patent Application No. 202210059103.X, filed with the China National Intellectual Property Administration on January 19, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Coverage is a basic function of a cellular network. Deploying a relay node in an area with poor signal coverage can expand network coverage. A conventional repeater (repeater) includes a radio frequency unit (radio unit, RU) module. Adaptive beamforming (beamforming, BF) is not performed on a user access side, but static beamforming in a fixed direction is usually used and manually managed. A smart repeater (smart repeater, SR) can implement an intelligent amplification and forwarding operation for a plurality of beam signals, for example, can support uplink and downlink sensing and dynamic time division duplex (time division duplex, TDD), bandwidth configurations, beam sensing, access-side beamforming (beamforming, BF), uplink (uplink, UL) or downlink (downlink, DL) forwarding power control, and dynamic switching. Especially in frequency range 2 (frequency range 2, FR2) frequency bands (generally referred to as a millimeter wave frequency band) in a new radio (new radio, NR) standard defined by the 3rd generation partnership project (3rd generation partnership project, 3GPP), the SR has an adaptive BF capability, and is also architecturally different from the conventional repeater (repeater). In addition to including the RU module, the SR further includes an independent mobile terminal (mobile terminal, MT) module, which is newly added to dedicatedly receive and feed back control signaling from a network device. In a relay amplification and forwarding scenario, the SR may, in a TDD or FDD mode, amplify a downlink signal sent by the network device and forward the downlink signal to a terminal device, and amplify an uplink signal sent by the terminal device and forward the uplink signal to the network device. In addition, when the downlink signal is forwarded to the terminal device on a terminal device access side, specific beamforming transmission for the terminal device is implemented.

Currently, how the SR intelligently or efficiently forwards a beam of the network device is a subject urgently to be studied.

### SUMMARY

Embodiments of this application disclose a communication method and apparatus. The method can be applied to a smart repeater (smart repeater), to implement smart beam forwarding by the repeater.

According to a first aspect, an embodiment of this application discloses a communication method. The method includes:

A first node receives a beam set and first indication information from a second node, where the beam set includes at least one beam.

The first node determines, based on the first indication information, identification information of at least one beam that needs to be forwarded by the first node in the beam set.

The first node forwards, based on the identification information of the at least one beam that needs to be forwarded by the first node in the beam set and receiving time information of the at least one beam that needs to be forwarded by the first node, the at least one beam that needs to be forwarded by the first node.

In the foregoing method, the first node determines, by receiving the first indication information from the second node, the identification information of the at least one beam that needs to be forwarded, and then the first node forwards, based on the identification information of the at least one beam that needs to be forwarded and the receiving time information of the at least one beam that needs to be forwarded, the at least one beam that needs to be forwarded by the first node. In this way, smart beam forwarding by a repeater can be implemented in the forwarding manner.

In a possible implementation, that the first node forwards, based on the identification information of the at least one beam that needs to be forwarded by the first node in the beam set and receiving time information of the at least one beam that needs to be forwarded by the first node, the at least one beam that needs to be forwarded by the first node includes: The first node determines a forwarding time location based on the identification information of the at least one beam that needs to be forwarded by the first node in the beam set and the receiving time information of the at least one beam that needs to be forwarded by the first node. The first node forwards, at the forwarding time location, the at least one beam that needs to be forwarded by the first node.

In another possible implementation, the receiving time information includes a frame number, a quantity of slots, and a starting orthogonal frequency division multiplexing symbol location.

In still another possible implementation, the first indication information includes at least one of the following: identification information of at least one beam in the beam set and a sending periodicity of the beam set.

In still another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the identification information of the at least one second beam associated with the first beam is carried in the system information.

In still another possible implementation, the first indication information further includes one or more of the following: a quantity of beams that need to be forwarded by the first node in the beam set and first duration information, where the first duration information indicates duration for which the first node forwards the at least one beam that needs to be forwarded by the first node.

In still another possible implementation, the first indication information includes one or more of the following: a first bitmap and second indication information, where the first bitmap indicates identification information and time information of a beam that needs to be forwarded by the first node in the beam set, and the second indication information indicates whether the first node temporally and continuously forwards the at least one beam that needs to be forwarded by the first node.

In still another possible implementation, a value of a K^{th} bit in the first bitmap being a first preset value indicates that an index of the beam that needs to be forwarded by the first node in the beam set is K or K-1, where K is an integer.

In still another possible implementation, one bit in the first bitmap corresponds to one unit time interval or time location. When the value of the K^{th} bit in the first bitmap is the first preset value, the first node forwards, at one unit time interval or time location corresponding to the K^{th} bit, the beam whose index is K or K-1 in the beam set.

According to a second aspect, an embodiment of this application discloses a communication method. The method includes:

A second node generates a beam set and first indication information, where the beam set includes at least one beam.

The second node sends the beam set and the first indication information to a first node, where the first indication information is used to determine identification information of at least one beam that needs to be forwarded by the first node in the beam set.

In a possible implementation, the first indication information includes at least one of the following: identification information of at least one beam in the beam set and a sending periodicity of the beam set.

In another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the first indication information further includes one or more of the following: a quantity of beams that need to be forwarded by the first node in the beam set and first duration information, where the first duration information indicates duration for which the first node forwards the at least one beam that needs to be forwarded by the first node.

In still another possible implementation, the first indication information includes one or more of the following: a first bitmap and second indication information, where the first bitmap indicates identification information and time information of a beam that needs to be forwarded by the first node in the beam set, and the second indication information indicates whether the first node temporally and continuously forwards the at least one beam that needs to be forwarded by the first node.

In still another possible implementation, a value of a K^{th} bit in the first bitmap being a first preset value indicates that an index of the beam that needs to be forwarded by the first node in the beam set is K or K-1, where K is an integer.

For technical effects brought by the second aspect or the possible implementations, refer to descriptions of the technical effects of the first aspect or the corresponding implementations.

According to a third aspect, an embodiment of this application discloses a communication apparatus. The apparatus includes at least one processor and a communication interface, and the at least one processor invokes a computer program or instructions stored in a memory to perform any one of the implementations of the first aspect and the second aspect.

According to a fourth aspect, an embodiment of this application discloses a communication apparatus, including a processing unit and a communication unit.

The communication unit is configured to receive a beam set and first indication information from a second node, where the beam set includes at least one beam.

The processing unit is configured to determine, based on the first indication information, identification information of at least one beam that needs to be forwarded by the apparatus in the beam set.

The processing unit is configured to forward, based on the identification information of the at least one beam that needs to be forwarded by the apparatus in the beam set and receiving time information of the at least one beam that needs to be forwarded by the apparatus, the at least one beam that needs to be forwarded by the apparatus.

In a possible implementation, the processing unit is configured to: determine a forwarding time location based on the identification information of the at least one beam that needs to be forwarded by the apparatus in the beam set and the receiving time information of the at least one beam that needs to be forwarded by the apparatus; and forward, at the forwarding time location, the at least one beam that needs to be forwarded by the apparatus.

In another possible implementation, the receiving time information includes a frame number, a quantity of slots, and a starting orthogonal frequency division multiplexing symbol location.

In still another possible implementation, the first indication information includes at least one of the following: identification information of at least one beam in the beam set and a sending periodicity of the beam set.

In still another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the identification information of the at least one second beam associated with the first beam is carried in the system information.

In still another possible implementation, the first indication information further includes one or more of the following: a quantity of beams that need to be forwarded by the apparatus in the beam set and first duration information, where the first duration information indicates duration for which the apparatus forwards the at least one beam that needs to be forwarded by the apparatus.

In still another possible implementation, the first indication information includes one or more of the following: a first bitmap and second indication information, where the first bitmap indicates identification information and time information of a beam that needs to be forwarded by the apparatus in the beam set, and the second indication information indicates whether the apparatus temporally and continuously forwards the at least one beam that needs to be forwarded by the apparatus.

In still another possible implementation, a value of a K^{th} bit in the first bitmap being a first preset value indicates that an index of the beam that needs to be forwarded by the apparatus in the beam set is K or K-1, where K is an integer.

In still another possible implementation, one bit in the first bitmap corresponds to one unit time interval or time location; and the processing unit is configured to: when the value of the K^{th} bit in the first bitmap is the first preset value, forward, at one unit time interval or time location corresponding to the K^{th} bit, the beam whose index is K or K-1 in the beam set.

For technical effects brought by the fourth aspect or the possible implementations, refer to descriptions of the technical effects of the first aspect or the corresponding implementations.

According to a fifth aspect, an embodiment of this application discloses a communication apparatus, including a processing unit and a communication unit.

The processing unit is configured to generate a beam set and first indication information, where the beam set includes at least one beam.

The communication unit is configured to send the beam set and the first indication information to a first node, where the first indication information is used to determine identification information of at least one beam that needs to be forwarded by the first node in the beam set.

In a possible implementation, the first indication information includes at least one of the following: identification information of at least one beam in the beam set and a sending periodicity of the beam set.

In another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the first indication information further includes one or more of the following: a quantity of beams that need to be forwarded by the first node in the beam set and first duration information, where the first duration information indicates duration for which the first node forwards the at least one beam that needs to be forwarded by the first node.

In still another possible implementation, the first indication information includes one or more of the following: a first bitmap and second indication information, where the first bitmap indicates identification information and time information of a beam that needs to be forwarded by the first node in the beam set, and the second indication information indicates whether the first node temporally and continuously forwards the at least one beam that needs to be forwarded by the first node.

In still another possible implementation, a value of a K^{th} bit in the first bitmap being a first preset value indicates that an index of the beam that needs to be forwarded by the first node in the beam set is K or K-1, where K is an integer.

For technical effects brought by the fifth aspect or the possible implementations, refer to descriptions of the technical effects of the second aspect or the corresponding implementations.

According to a sixth aspect, an embodiment of this application discloses a chip system. The chip system includes at least one processor and a communication interface, and the at least one processor is configured to execute a computer program or instructions, to implement the method according to any one of the foregoing aspects.

According to a seventh aspect, an embodiment of this application discloses a computer-readable storage medium. The computer-readable storage medium stores computer instructions, and when the computer instructions are run on a processor, the method according to any one of the foregoing aspects is implemented.

According to an eighth aspect, an embodiment of this application discloses a computer program product. The computer program product includes computer program code, and when the computer program code is run on a computer, the method according to any one of the foregoing aspects is implemented.

According to a ninth aspect, an embodiment of this application discloses a communication system. The system includes the apparatus according to the fourth aspect and the apparatus according to the fifth aspect.

### BRIEF DESCRIPTION OF DRAWINGS

The following describes accompanying drawings used in embodiments of this application.
FIG. 1 is a diagram of a structure of a communication system according to an embodiment of this application;
FIG. 2 is a diagram of a structure of a first node according to an embodiment of this application;
FIG. 3 is a diagram of sending an SSB according to an embodiment of this application;
FIG. 4 is a diagram of sending an SSB according to an embodiment of this application;
FIG. 5 is a diagram of sending an SSB according to an embodiment of this application;
FIG. 6 is a schematic flowchart of a communication method according to an embodiment of this application;
FIG. 7 is a diagram of a structure of a communication apparatus according to an embodiment of this application; and
FIG. 8 is a diagram of a structure of a communication apparatus according to an embodiment of this application.

### DESCRIPTION OF EMBODIMENTS

The following describes embodiments of this application with reference to the accompanying drawings in embodiments of this application.

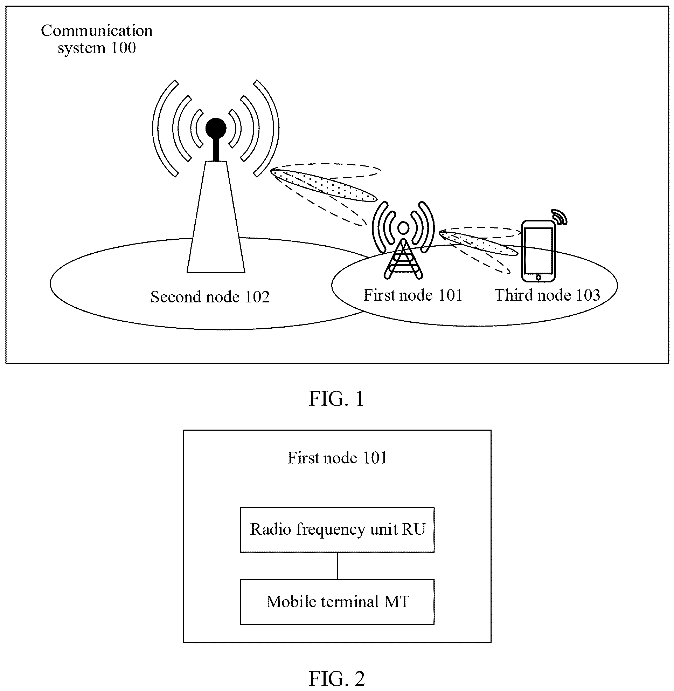

FIG. 1 is a diagram of a structure of a communication system 100 according to an embodiment of this application. The communication system 100 includes a first node 101, a second node 102, and a third node 103. The first node 101 may be a smart repeater (smart repeater, SR), and the SR may also be referred to as a smart repeater or a smart forwarder. The second node 102 may be a network device. The third node 103 may be a terminal device. Under control of the second node 102, the first node 101, in a time division duplex (time division duplex, TDD) or frequency division duplex (frequency division duplex, FDD) mode, amplifies an uplink signal sent by the third node forwards the uplink signal to the second node 102, and amplifies a downlink signal sent by the second node 102 and forwards the downlink signal to the third node 103. In addition, when the downlink signal is forwarded to the third node 103, beamforming (beamforming, BF) transmission for the third node 103 is implemented. For example, in a TDD mode, the first node 101 forwards, to the third node 103 in each downlink transmission periodicity, beams of signals such as a synchronization signal and physical broadcast channel block (synchronization signal and PBCH block, SSB), a channel state information reference signal (channel state information reference signal, CSI-RS), paging (paging), downlink control information (downlink control information, DCI), and downlink service data transmission that are delivered by the second node 102, to establish a downlink connection and transmission channel for the third node 103; and the first node 101 forwards, to the second node 102 in an uplink transmission periodicity, signals such as random access, a radio resource control (radio resource control, RRC) connection, an uplink scheduling request, and service data that are initiated by the third node 103, to establish an uplink connection and transmission channel for the third node 103. The method in embodiments of this application may be applied to the communication system 100 shown in FIG. 1.

FIG. 2 shows a diagram of a structure of a first node 101. The first node 101 may include a radio frequency unit (radio unit, RU) module and a mobile terminal (mobile terminal, MT) module. When the first node is an SR, the RU module in the first node may be referred to as an SR-RU for short, and the MT module in the first node may be referred to as an SR-MT for short. The MT module in the first node is configured to receive and feed back control signaling of a second node 102. A communication link between the first node 101 and the second node 102 may be referred to as a backhaul link (backhaul link), which may be referred to as a BH side for short. The backhaul link may be used by the first node 101 to receive a signal sent by the second node 102 or used by the first node 101 to forward, to the second node 102, a signal sent by a third node 103. A communication link between the first node 101 and the third node 103 may be referred to as an access link (access link), which may be referred to as a terminal device access side for short. The access link may be used by the first node 101 to receive a signal sent by the third node 103 or used by the first node 101 to forward, to the third node 103, a signal sent by the second node 102.
(1) A terminal device includes user equipment (user equipment, UE) and includes a device providing voice and/or data connectivity for a user, and specifically, includes a device providing voice for a user, a device providing data connectivity for a user, or a device providing voice and data connectivity for a user. For example, a hand-held device with a wireless connection function or a processing device connected to a wireless modem may be included. The terminal device may communicate with a core network through a radio access network (radio access network, RAN), and exchange voice or data with the RAN, or exchange voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, a portable, pocket-sized, hand-held, or a computer built-in mobile apparatus, or the like. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example rather than limitation, in embodiments of this application, the terminal device may alternatively be a wearable device. The wearable device may also be referred to as a wearable intelligent device, an intelligent wearable device, or the like, and is a general term of wearable devices, such as glasses, gloves, watches, clothing, and shoes, that are intelligently designed and developed for daily wear by using a wearable technology. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include devices with full-featured and large-sized that can implement all or a part of functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a relay (relay). Alternatively, it is understood that any device that can perform data communication with a base station may be considered as the terminal device.

In embodiments of this application, an apparatus configured to implement a function of the terminal device may be a terminal device, or may be an apparatus, for example, a chip system, that can support the terminal device in implementing the function. The apparatus may be installed in the terminal device. In this embodiment of this application, the chip system may include a chip, or may include a chip and another discrete component. In the technical solutions provided in embodiments of this application, an example in which the apparatus configured to implement the function of a terminal is the terminal device is used for describing the technical solutions provided in embodiments of this application.

(2) A network device includes, for example, an access network (access network, AN) device such as a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5th generation, 5G) mobile communication technology NR system (also briefly referred to as an NR system), or may include a central unit (central unit, CU) and a distributed unit (distributed unit, DU) in a cloud access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement functions of the network device may be a network device, or may be an apparatus, for example, a chip system, that can support the network device in implementing the function. The apparatus may be installed in the network device. In the technical solutions provided in embodiments of this application, an example in which the apparatus configured to implement the functions of the network device is the network device is used for describing the technical solutions provided in embodiments of this application.

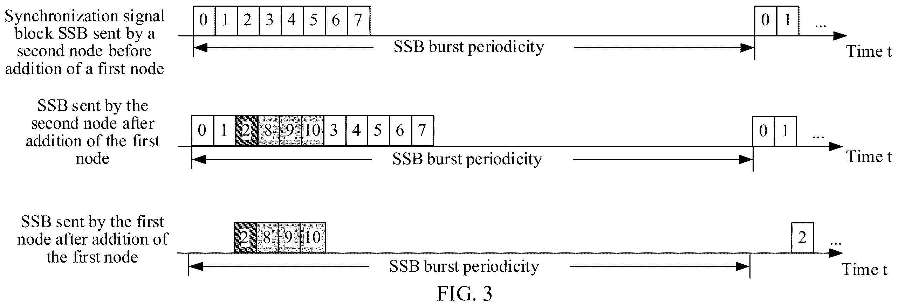

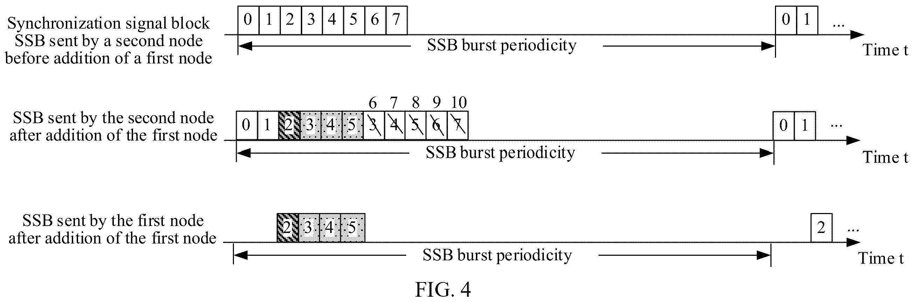

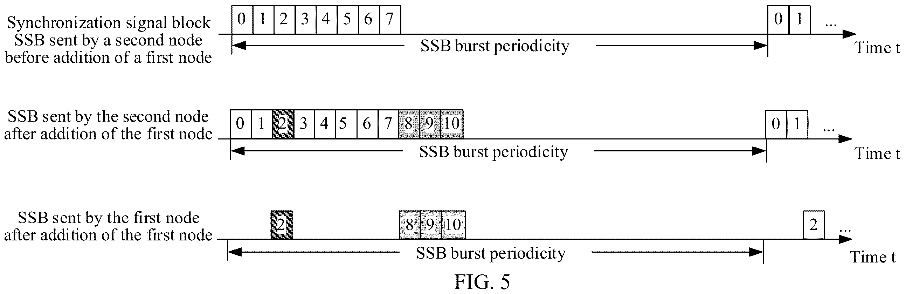

For example, a beam forwarded by the first node is an SSB. When the second node admits that the first node provides a signal relay service for a terminal covered by the second node, in each SSB burst (SSB burst) periodicity, the second node needs to additionally increase a quantity of SSB beams to be sent. A quantity of increased SSBs depends on a quantity of SSBs forwarded in a coverage area of the first node scanned by the first node. If the quantity of SSBs forwarded in the coverage area of the first node scanned by the first node is N, the second node needs to additionally send (N-1) SSBs. The second node learns of, using an initial access process of the first node, an SSB that operates best with the first node, for example, an SSBx (that is, an SSB whose SSB index=x), where the SSB is referred to as a "backhaul SSB", that is, a BH-SSB. The second node sends the newly added (N-1) SSBs in a same sending direction of the BH-SSB via a beamforming parameter that is the same as that for sending the BH-SSB, so that the first node can receive N SSBs, and forward the N SSBs to an air interface based on forwarding configuration information, to implement scanning for the SSBs in the coverage area of the first node. For example, in the following descriptions in FIG. 3, FIG. 4, and FIG. 5, "before addition of the first node" means before the first node is connected to the second node using the initial access process, and completes related configuration to normally perform beam forwarding; and "after addition of the first node" means after the first node is connected to the second node using the initial access process, and completes related configuration to normally perform beam forwarding. An SSB burst periodicity is an SSB scanning periodicity, which may also be referred to as an SSB periodicity. It is assumed that before addition of the first node, in other words, before the second node admits the first node, eight SSBs are broadcast in each SSB burst periodicity, a backhaul SSB of the first node is an SSB2, and a quantity N of forwarded SSBs is equal to 4. As shown in FIG. 3, after addition of the second node, in other words, after the second node admits a signal relay service provided by the first node, the quantity of SSBs sent by the second node increases from 8 to 11, and the three newly added SSBs are inserted immediately after the BH-SSB. The three newly added SSBs may be an SSB8, an SSB9, and an SSB10, and the first node sequentially forwards the SSB2 and the SSB8 to the SSB10. Alternatively, as shown in FIG. 4, indexes of the three newly added SSBs may be 3 to 5, and indexes of the original SSB3 to SSB7 are sequentially modified to 6 to 10. In this way, the first node temporally and continuously forwards the SSB2 to the SSBS. Generally, the four SSBs are sent temporally and continuously. However, in a possible implementation, as shown in FIG. 5, the second node may alternatively sequentially send the SSB8 to the SSB10 after the SSB7 in an ascending time sequence of SSB indexes. The first node first forwards the SSB2 delivered by the second node, and then forwards, after a time period, the SSB8 to the SSB10 delivered by the second node.

Forwarding configuration information delivered by the second node is sent to the first node, not to the third node. The third node obtains, based on an update of system information (system information, SI), index information of a newly added beam delivered by a serving cell. However, if the first node temporally and continuously forwards the backhaul SSB and the newly added SSB, the newly added SSB is an additional SSB that needs to be sent by the second node in each SSB burst (SSB burst) periodicity when the second node admits the signal relay service provided by the first node for the terminal covered by the second node. As shown in FIG. 3, however, the third node does not know that a time location of the newly added SSB forwarded by the first node changes. As a result, the third node may miss detecting the SSB. For example, at a sending time location corresponding to the newly added SSB, the second node originally does not deliver the SSB, and the third node does not detect the SSB at the time location for the purpose of power saving (power saving). However, after addition of the first node, the second node starts to send the newly added SSB at the time location, and the third node still performs detection in a previous manner. In this case, missing detection may occur, and a connection between the third node and the second node is affected.

On a terminal device access side, the first node generally supports sending of a plurality of beam signals. In this case, after the first node receives a downlink signal on the BH side, which beams to be forwarded and a direction to which a signal is forwarded on the access side need to be indicated by the second node. Specifically, the second node sends the forwarding configuration information to the first node, where the forwarding configuration information includes forwarding start time information, a forwarding time interval, and a time forwarding pattern of the first node, and the forwarding configuration information indicates how the first node forwards signals received from the second node, that is, a time period in which received beam signals are forwarded. The forwarding configuration information may be used to forward an SSB, a CSI-RS, a signal transmitted by a downlink data service, and the like. The time forwarding pattern of the first node indicates time intervals at which beams are forwarded from a forwarding start time. The time forwarding pattern of the first node may be a bitmap (bitmap). A k^{th} bit in the bitmap corresponds to a k^{th} time interval. The first node forwards an access-side signal at a time interval whose value in the bitmap is 1, in other words, the first node skips a time interval whose value in the bitmap is 0 to forward the access-side signal. However, signaling overheads are high in a manner of accurately controlling a forwarding behavior of the first node by using a method in which the second node sends the forwarding configuration information to the first node. For the foregoing problem, embodiments of this application provide the following solutions.

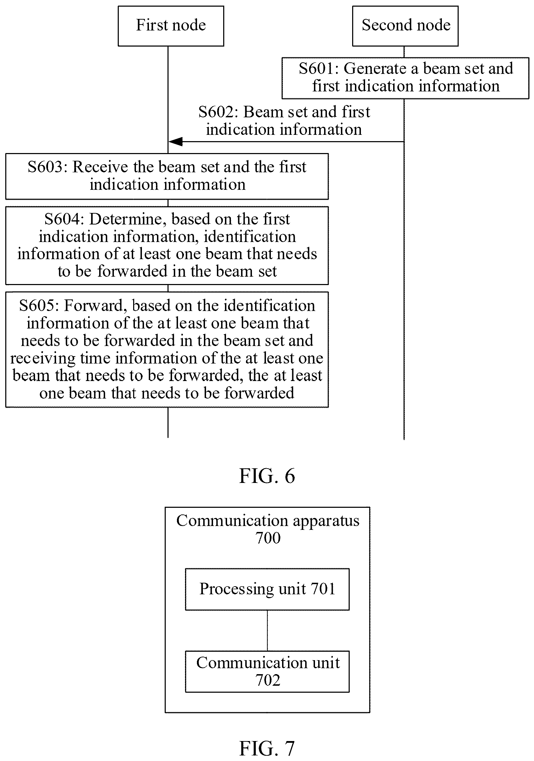

FIG. 6 shows a communication method according to an embodiment of this application. The method includes but is not limited to the following steps.

Step S601: A second node generates a beam set and first indication information.

Step S602: The second node sends the beam set and the first indication information to a first node.

Specifically, a sequence in which the second node sends the beam set and the first indication information to the first node is not limited in this embodiment of this application. For example, the second node may first send the beam set, and then send the first indication information; or the second node first sends the first indication information, and then sends the beam set; or the second node simultaneously sends the beam set and the first indication information.

Step S603: The first node receives the beam set and the first indication information from the second node.

Specifically, the beam set includes at least one beam. The beam in the beam set may be a synchronization signal block (synchronization signal and physical broadcast channel block, SSB), a channel state information reference signal (channel state information reference signal, CSI-RS), or a beam corresponding to downlink service data transmission. This is not limited herein.

Optionally, the first indication information includes at least one of the following: identification information of at least one beam in the beam set and a sending periodicity of the beam set. The identification information of the at least one beam in the beam set may be index information of the at least one beam in the beam set. For example, a beam in the beam set is an SSB, and the first indication information includes at least one of the following: index information of the SSB and a sending periodicity of an SSB set. The sending periodicity of the SSB set may be an SSB burst periodicity, that is, an SSB scanning periodicity, or may be referred to as an SSB periodicity. Optionally, the index information of the SSB may be an SSB list. Optionally, the identification information of the at least one beam in the beam set may be carried in dedicated signaling, an RRC message, downlink control information (downlink control information, DCI), or a media access control (media access control, MAC) control element (control element, CE), and the sending periodicity of the beam set may be carried in the dedicated signaling, the RRC message, the DCI, or the MAC CE. Optionally, the identification information of the at least one beam in the beam set may be carried in dedicated signaling, an RRC message, DCI, or a MAC CE, and the sending periodicity of the beam set may be carried in system information (system information, SI).

Optionally, the first indication information includes at least one of the following: identification information of a first beam in the beam set, identification information of at least one second beam associated with the first beam, and a sending periodicity of the beam set. The identification information of the first beam in the beam set may be identification information of a backhaul synchronization signal block (backhaul synchronization signal and physical broadcast channel block, BH-SSB) or identification information of a channel state information reference signal (channel state information reference signal, CSI-RS). The identification information of the BH-SSB may be an index of the BH-SSB. The BH-SSB may include an optimal SSB determined by the first node in a process in which the first node initially accesses the second node, for example, an SSB with a best signal received by the second node, or may be understood as an SSB aligned with a direction of the second node, or an SSB that includes the second node in a coverage area. Optionally, the identification information of the first beam in the beam set may be carried in dedicated signaling, an RRC message, DCI, or a MAC CE, and the identification information of the at least one second beam associated with the first beam and the sending periodicity of the beam set may be carried in the dedicated signaling, the RRC message, the DCI, or the MAC CE. Optionally, the identification information of the first beam in the beam set may be carried in dedicated signaling, an RRC message, DCI, or a MAC CE, and the identification information of the at least one second beam associated with the first beam and the sending periodicity of the beam set may be carried in SI. Optionally, when the identification information of the first beam in the beam set may be carried in the dedicated signaling, the RRC message, the DCI, or the MAC CE, and the identification information of the at least one second beam associated with the first beam and the sending periodicity of the beam set may be carried in the SI, the first node may first determine the identification information of the first beam based on the dedicated signaling, the RRC message, the DCI, or the MAC CE, and then determine, based on the SI, the at least one second beam associated with the first beam.

Optionally, when the identification information of the first beam in the beam set is carried in the dedicated signaling, the RRC message, the DCI, or the MAC CE, and the identification information of the at least one second beam associated with the first beam and the sending periodicity of the beam set are carried in the SI, the first beam may be associated with the at least one second beam associated with the first beam in two manners. Manner 1: An associated beam index information element (information element, IE) is added to each associated second beam in the SI, to indicate a first beam associated with each associated second beam. For example, the IE may be assigned a value of (8, 2), (9, 2), (10, 2), (11, 3), (12, 3), (13, 3), (14, 4), (15, 4), (16, 4), and the like, where 2, 3, and 4 are indexes of first beams in a possible beam set, and (8, 2), (9, 2), and (10, 2) indicate that indexes of at least one second beam associated with the first beam whose index is 2 are 8, 9, and 10; (11, 3), (12, 3), and (13, 3) indicate that indexes of at least one second beam associated with the first beam whose index is 3 are 11, 12, and 13; and (14, 4), (15, 4), and (16, 4) indicate that indexes of at least one second beam associated with the first beam whose index is 4 are 14, 15, and 16. Manner 2: An associated beam group list (SR-SSB group list) is added to the SI, where each beam group list includes one first beam and at least one second beam associated with the first beam. For example, the associated beam group list is (2, 8, 9, 10), (3, 11, 12, 13), (4, 14, 15, 16), and the like, where 2, 3, and 4 are indexes of first beams in a possible beam set, (2, 8, 9, 10) indicates that indexes of at least one second beam associated with the first beam whose index is 2 are 8, 9, and 10; (3, 11, 12, 13) indicates that indexes of at least one second beam associated with the first beam whose index is 3 are 11, 12, and 13; and (4, 14, 15, 16) indicates that indexes of at least one second beam associated with the first beam whose index is 4 are 14, 15, and 16. For example, the beam includes an SSB. The first node first determines that the identification information of the first beam is an SSB2 based on the dedicated signaling, the RRC message, the DCI, or the MAC CE, and then determines that SSBs associated with the SSB2 are an SSB8, an SSB9, and an SSB10 based on the form of association between the first beam and the second beam in the SI.

Optionally, when the identification information of the first beam in the beam set is carried in the dedicated signaling, the RRC message, the DCI, or the MAC CE, and the identification information of the at least one second beam associated with the first beam and the sending periodicity of the beam set are carried in the SI, a third node may determine location information of a second beam set based on the identification information of the at least one second beam associated with the first beam in the SI, and detect the second beam at a corresponding location. This step is applicable to a scenario in which the first node temporally and continuously forwards at least one beam that needs to be forwarded by the first node. For example, the third node determines, by using an ssb-PositionsInBurst information element (indicating a sending location of an SSB in a burst periodicity) in the SI, that the SSB2 has been delivered, and determines, by using the identification information that is of the at least one second beam associated with the first beam and that is included in the SI, that the SSB2, the SSB8, the SSB9, and the SSB10 are continuously sent together. After detecting the SSB2, the third node continuously detects a beam at a subsequent time location without missing detection. Optionally, for legacy UE (legacy UE), determining the location information of the second beam set based on the identification information of the at least one second beam associated with the first beam may not be supported. Therefore, if the first node temporally and continuously forwards at least one beam that needs to be forwarded, the legacy UE may perform detection at all SSB sending locations.

Optionally, the first indication information may be carried in an RRC message sent by the second node to the first node. For example, the first indication information may be included in an RRC reconfiguration (RRCReconfiguration) message. For example, the RRCReconfiguration message includes extensible information elements, for example, a future critical extension (criticalExtensionsFuture) information element, and a late non-critical extension (lateNonCriticalExtension) information element and a non-critical extension (nonCriticalExtension) information element in an RRC reconfiguration IE (RRCReconfiguration-IE) information element. The second node may include at least one item of the first indication information by using these extensible information elements. In a specific implementation, whether these extensible information elements are used and which extensible information element is specifically used are not limited.

Optionally, the first indication information includes the identification information of the first beam in the beam set, and the first indication information may further include one or more of the following: a quantity of beams that need to be forwarded by the first node in the beam set, and first duration information. The first duration information indicates duration for which the first node forwards the at least one beam that needs to be forwarded. Optionally, the first duration information may be a quantity of orthogonal frequency division multiplexing (orthogonal frequency division multiplexing, OFDM) symbols. For example, if the first duration information is four, it indicates that duration for which the first node forwards the at least one beam that needs to be forwarded is four OFDM symbols. In an example, the first indication information includes the identification information of the first beam in the beam set, and the quantity of beams that need to be forwarded by the first node in the beam set is predefined in a protocol. For example, the first indication information includes that index information of the first beam is an SSB2, and the quantity of beams that need to be forwarded by the first node in the beam set is four, which is predefined in the protocol. Correspondingly, the first node determines that index information of SSBs that need to be forwarded is an SSB2, an SSB3, an SSB4, and an SSB5 based on the first indication information. In another example, the first indication information includes the identification information of the first beam in the beam set and the quantity of beams that need to be forwarded by the first node in the beam set. In still another example, the first indication information includes the identification information of the first beam in the beam set and the first duration information. For example, the first indication information includes that index information of the first beam is an SSB2, and the first duration information is four. Because the first duration information being four indicates that duration for which the first node forwards the at least one beam that needs to be forwarded is four OFDM symbols, correspondingly, the first node determines that index information of SSBs that need to be forwarded is an SSB2, an SSB3, an SSB4, and an SSB5 based on the first indication information. It should be noted that the first indication information includes the identification information of the first beam in the beam set, and the first indication information may further include one or more of the following: the quantity of beams that need to be forwarded by the first node in the beam set and the first duration information. This indication manner is applicable to a scenario in which the first node temporally and continuously forwards at least one beam that needs to be forwarded.

Optionally, the first indication information includes at least one of the following: a first bitmap and second indication information. The first bitmap indicates identification information and time information of a beam that needs to be forwarded by the first node in the beam set. A value of a K^{th} bit in the first bitmap being a first preset value indicates that an index of the beam that needs to be forwarded by the first node in the beam set is K or K-1, where K is an integer. One bit in the first bitmap corresponds to one unit time interval or time location. When the value of the K^{th} bit in the first bitmap is the first preset value, the first node forwards, at one unit time interval or time location corresponding to the K^{th} bit, the beam whose index is K or K-1 in the beam set. In an example, the beam is an SSB, and the first bitmap has 64 bits. When a bit in the first bitmap is 0, it indicates that an SSB corresponding to the bit does not need to be forwarded. When a bit in the first bitmap is 1, it indicates that an SSB corresponding to the bit needs to be forwarded. For example, if the first bitmap is 00100000111000...000 (64 bits in total), it indicates that SSBs that need to be forwarded by the first node are an SSB2, an SSB8, an SSB9, and an SSB 10. Optionally, the first bitmap may alternatively be 4 bits, 8 bits, 16 bits, or 32 bits. The second indication information indicates whether the first node temporally and continuously forwards at least one beam that needs to be forwarded by the first node. In an example, when the second indication information is 1, it indicates that the first node temporally and continuously forwards the at least one beam that needs to be forwarded by the first node. When the second indication information is 0, it indicates that the first node temporally and discontinuously forwards the at least one beam that needs to be forwarded by the first node.

Optionally, the first indication information may be carried in dedicated signaling, an RRC message, DCI, a MAC CE, or SI.

Step S604: The first node determines, based on the first indication information, identification information of at least one beam that needs to be forwarded by the first node in the beam set.

Optionally, when the first indication information includes identification information of at least one beam in the beam set, the first node determines, based on the identification information of the at least one beam in the beam set, the identification information of the at least one beam that needs to be forwarded by the first node in the beam set. In an example, the beam is an SSB, and the first indication information includes index information of four SSBs: an SSB2, an SSB3, an SSB4, and an SSBS. The first node determines that the index information of SSBs that need to be forwarded is the SSB2, the SSB3, the SSB4, and the SSB5 based on the first indication information.

Optionally, when the first indication information includes identification information of the first beam in the beam set and identification information of at least one second beam associated with the first beam, the first node determines, based on the identification information of the first beam in the beam set and the identification information of the at least one second beam associated with the first beam, the identification information of the at least one beam that needs to be forwarded by the first node in the beam set. In an example, the beam is an SSB, the first indication information includes that index information of the first beam is an SSB2, and index information of three second beams associated with the first beam is an SSB8, an SSB9, and an SSB10. The first node determines that index information of SSBs that need to be forwarded is an SSB2, an SSB8, an SSB9, and an SSB 10 based on the first indication information.

Optionally, when the first indication information includes the identification information of the first beam in the beam set, the first indication information may further include one or more of the following: a quantity of beams that need to be forwarded by the first node in the beam set, and first duration information. The first node determines, based on the identification information of the first beam in the beam set, and the quantity of beams that need to be forwarded by the first node in the beam set and/or the first duration information, the identification information of the at least one beam that needs to be forwarded by the first node in the beam set. In an example, the beam is an SSB, the first indication information includes that index information of the first beam is an SSB2, and the quantity of beams that need to be forwarded by the first node in the beam set is four. The first node determines that index information of SSBs that need to be forwarded is an SSB2, an SSB3, an SSB4, and an SSB5 based on the first indication information.

Optionally, when the first indication information includes a first bitmap, the first node determines, based on the first bitmap, the identification information of the at least one beam that needs to be forwarded by the first node in the beam set. In an example, the beam is an SSB, the first bitmap included in the first indication information is 00100000111000...000 (64 bits in total), and the first node determines that index information of SSBs that need to be forwarded is an SSB2, an SSB8, an SSB9, and an SSB10 based on the first indication information.

Step S605: The first node forwards, based on the identification information of the at least one beam that needs to be forwarded by the first node in the beam set and receiving time information of the at least one beam that needs to be forwarded by the first node, the at least one beam that needs to be forwarded by the first node.

Specifically, the first node may determine a forwarding time location based on the identification information of the at least one beam that needs to be forwarded by the first node in the beam set and the receiving time information of the at least one beam that needs to be forwarded by the first node, and then forward, at the forwarding time location, the at least one beam that needs to be forwarded by the first node. Optionally, the receiving time information of the at least one beam that needs to be forwarded by the first node is in a first periodicity, and the forwarding time location is in a second periodicity. The second periodicity is an adjacent periodicity of the first periodicity, and the second periodicity is after the first periodicity in time domain. Optionally, the receiving time information includes a frame number, a quantity of slots, and a starting OFDM location. To be specific, the first node determines, based on the identification information of the at least one beam that needs to be forwarded by the first node in the beam set and the receiving time information of the at least one beam that needs to be forwarded by the first node, for example, a frame number x, a quantity y of slots, and a starting OFDM location z in the first periodicity, that the forwarding time location is a frame number x, a quantity y of slots, and a starting OFDM location z in the second periodicity, and then forwards, at the forwarding time location, the at least one beam that needs to be forwarded by the first node. For example, the identification information of the at least one beam that needs to be forwarded by the first node in the beam set is an SSB2, an SSB8, an SSB9, and an SSB10. The first node determines a specific frame, a specific slot, and a specific OFDM symbol in the slot in the first periodicity in which the SSB2, the SSB8, the SSB9, and the SSB10 are received. Then, the first node separately forwards the SSB2, the SSB8, the SSB9, and the SSB10 in a specific frame, a specific slot, and a specific OFDM symbol in the slot in the second periodicity. The second periodicity is an adjacent periodicity of the first periodicity, and the second periodicity is after the first periodicity in time domain. Optionally, the first periodicity and the second periodicity may be SSB burst periodicities.

Optionally, the receiving time information of the at least one beam that needs to be forwarded by the first node may be determined based on receiving time information of each beam in the beam set and the first indication information. In an example, the beam is an SSB, and indexes of beams in the beam set are an SSB0 to an SSB10. The first node records receiving time information of each of the SSB0 to the SSB10. The first indication information includes the identification information of the first beam in the beam set and identification information of at least one second beam associated with the first beam. The identification information of the first beam in the beam set is an SSB2, and identification information of three second beams associated with the first beam is an SSB8, an SSB9, and an SSB10. The first node determines receiving time information of the SSB2, the SSB8, the SSB9, and the SSB10 based on the recorded receiving time information of each of the SSB0 to the SSB10 and the first indication information. Optionally, the receiving time information of the at least one beam that needs to be forwarded by the first node may be determined based on the first indication information. In an example, the first indication information includes the identification information of the first beam in the beam set and identification information of at least one second beam associated with the first beam. The identification information of the first beam in the beam set is an SSB2, and identification information of three second beams associated with the first beam is an SSB8, an SSB9, and an SSB10. The first node records receiving time information of the SSB2, the SSB8, the SSB9, and the SSB10 based on the first indication information.

In the foregoing method, the first node determines, by receiving the first indication information from the second node, the identification information of the at least one beam that needs to be forwarded, and then the first node forwards, based on the identification information of the at least one beam that needs to be forwarded and the receiving time information of the at least one beam that needs to be forwarded, the at least one beam that needs to be forwarded by the first node. In this way, smart beam forwarding by a repeater can be implemented in the forwarding manner. Compared with a technical solution A in which a network device sends forwarding configuration information to an SR to configure a time period, a direction, and a set of BF parameters for the SR to forward a signal, so that the SR can be controlled to determine which beams should be forwarded after the SR receives a downlink signal on a backhaul side and a direction to which the signal is forwarded on an access side, the foregoing solution can implement smart beam forwarding by the repeater. Specifically, in the technical solution A, forwarding start time information, a forwarding time interval, information about a quantity of BF parameter sets supported by the SR, a time forwarding pattern of the SR, and a direction forwarding pattern of the SR need to be set in the forwarding configuration information to control an SR forwarding behavior. In other words, a large amount of configuration information is required to accurately control an SR forwarding operation, resulting in high signaling overheads. However, in this embodiment of this application, the first node may not need much configuration information, and determine, based on the first indication information, the identification information of the at least one beam that needs to be forwarded. In this way, the at least one beam that needs to be forwarded by the first node is forwarded, and signaling overheads are low.

The foregoing describes in detail the method in embodiments of this application, and the following provides an apparatus in embodiments of this application.

FIG. 7 is a diagram of a structure of a communication apparatus 700 according to an embodiment of this application. The communication apparatus 700 may include a processing unit 701 and a communication unit 702. The units are described in detail as follows.

The communication unit 702 is configured to receive a beam set and first indication information from a second node, where the beam set includes at least one beam.

The processing unit 701 is configured to determine, based on the first indication information, identification information of at least one beam that needs to be forwarded by the apparatus in the beam set.

The processing unit 701 is configured to forward, based on the identification information of the at least one beam that needs to be forwarded by the apparatus in the beam set and receiving time information of the at least one beam that needs to be forwarded by the apparatus, the at least one beam that needs to be forwarded by the apparatus.

In a possible implementation, the processing unit 701 is configured to: determine a forwarding time location based on the identification information of the at least one beam that needs to be forwarded by the apparatus in the beam set and the receiving time information of the at least one beam that needs to be forwarded by the apparatus; and forward, at the forwarding time location, the at least one beam that needs to be forwarded by the apparatus.

In another possible implementation, the receiving time information includes a frame number, a quantity of slots, and a starting orthogonal frequency division multiplexing symbol location.

In still another possible implementation, the first indication information includes at least one of the following: identification information of at least one beam in the beam set and a sending periodicity of the beam set.

In still another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the identification information of the at least one second beam associated with the first beam is carried in the system information.

In still another possible implementation, the first indication information further includes one or more of the following: a quantity of beams that need to be forwarded by the apparatus in the beam set and first duration information, where the first duration information indicates duration for which the apparatus forwards the at least one beam that needs to be forwarded by the apparatus.

In still another possible implementation, the first indication information includes one or more of the following: a first bitmap and second indication information, where the first bitmap indicates identification information and time information of a beam that needs to be forwarded by the apparatus in the beam set, and the second indication information indicates whether the apparatus temporally and continuously forwards the at least one beam that needs to be forwarded by the apparatus.

In still another possible implementation, a value of a K^{th} bit in the first bitmap being a first preset value indicates that an index of the beam that needs to be forwarded by the apparatus in the beam set is K or K-1, where K is an integer.

In still another possible implementation, one bit in the first bitmap corresponds to one unit time interval or time location; and the processing unit 701 is configured to: when the value of the K^{th} bit in the first bitmap is the first preset value, forward, at one unit time interval or time location corresponding to the K^{th} bit, the beam whose index is K or K-1 in the beam set.

It should be noted that, for implementations and beneficial effects of the units, refer to corresponding descriptions in the method embodiment shown in FIG. 6.

Optionally, detailed descriptions of the units in the communication apparatus 700 may be further as follows.

The processing unit 701 is configured to generate a beam set and first indication information, where the beam set includes at least one beam.

The communication unit 702 is configured to send the beam set and the first indication information to a first node, where the first indication information is used to determine identification information of at least one beam that needs to be forwarded by the first node in the beam set.

In a possible implementation, the first indication information includes at least one of the following: identification information of at least one beam in the beam set and a sending periodicity of the beam set.

In another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the first indication information further includes one or more of the following: a quantity of beams that need to be forwarded by the first node in the beam set and first duration information, where the first duration information indicates duration for which the first node forwards the at least one beam that needs to be forwarded by the first node.

In still another possible implementation, the first indication information includes one or more of the following: a first bitmap and second indication information, where the first bitmap indicates identification information and time information of a beam that needs to be forwarded by the first node in the beam set, and the second indication information indicates whether the first node temporally and continuously forwards the at least one beam that needs to be forwarded by the first node.

In still another possible implementation, a value of a K^{th} bit in the first bitmap being a first preset value indicates that an index of the beam that needs to be forwarded by the first node in the beam set is K or K-1, where K is an integer.

It should be noted that, for implementations and beneficial effects of the units, refer to corresponding descriptions in the method embodiment shown in FIG. 6.

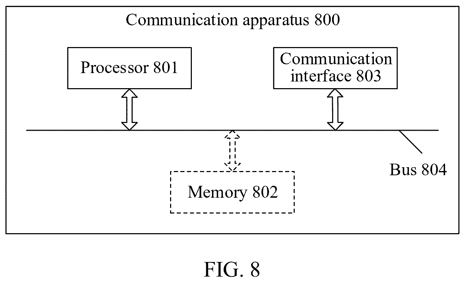

FIG. 8 shows a communication apparatus 800 according to an embodiment of this application. The communication apparatus 800 includes at least one processor 801 and a communication interface 803, and optionally, further includes a memory 802. The processor 801, the memory 802, and the communication interface 803 are connected to each other through a bus 804.

The memory 802 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store a related computer program and data. The communication interface 803 is configured to receive and send data.

The processor 801 may be one or more central processing units (central processing units, CPUs). When the processor 801 is one CPU, the CPU may be a single-core CPU or a multicore CPU.

The processor 801 in the communication apparatus 800 is configured to read computer program code stored in the memory 802, to perform the following operations:
receiving a beam set and first indication information from a second node by using the communication interface 803, where the beam set includes at least one beam;
determining, based on the first indication information, identification information of at least one beam that needs to be forwarded by the apparatus in the beam set; and
forwarding, based on the identification information of the at least one beam that needs to be forwarded by the apparatus in the beam set and receiving time information of the at least one beam that needs to be forwarded by the apparatus, the at least one beam that needs to be forwarded by the apparatus.

In a possible implementation, the processor 801 is configured to: determine a forwarding time location based on the identification information of the at least one beam that needs to be forwarded by the apparatus in the beam set and the receiving time information of the at least one beam that needs to be forwarded by the apparatus; and forward, at the forwarding time location, the at least one beam that needs to be forwarded by the apparatus.

In another possible implementation, the receiving time information includes a frame number, a quantity of slots, and a starting orthogonal frequency division multiplexing symbol location.

In still another possible implementation, the first indication information includes at least one of the following: identification information of at least one beam in the beam set and a sending periodicity of the beam set.

In still another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the identification information of the at least one second beam associated with the first beam is carried in the system information.

In still another possible implementation, the first indication information further includes one or more of the following: a quantity of beams that need to be forwarded by the apparatus in the beam set and first duration information, where the first duration information indicates duration for which the apparatus forwards the at least one beam that needs to be forwarded by the apparatus.

In still another possible implementation, the first indication information includes one or more of the following: a first bitmap and second indication information, where the first bitmap indicates identification information and time information of a beam that needs to be forwarded by the apparatus in the beam set, and the second indication information indicates whether the apparatus temporally and continuously forwards the at least one beam that needs to be forwarded by the apparatus.

In still another possible implementation, a value of a K^{th} bit in the first bitmap being a first preset value indicates that an index of the beam that needs to be forwarded by the apparatus in the beam set is K or K-1, where K is an integer.

In still another possible implementation, one bit in the first bitmap corresponds to one unit time interval or time location; and the processor 801 is configured to: when the value of the K^{th} bit in the first bitmap is the first preset value, forward, at one unit time interval or time location corresponding to the K^{th} bit, the beam whose index is K or K-1 in the beam set.

It should be noted that, for implementations and beneficial effects of the operations, refer to corresponding descriptions in the method embodiment shown in FIG. 6.

The processor 801 in the communication apparatus 800 is configured to read computer program code stored in the memory 802, to perform the following operations:
generating a beam set and first indication information, where the beam set includes at least one beam; and
sending the beam set and the first indication information to a first node by using the communication interface 803, where the first indication information is used to determine identification information of at least one beam that needs to be forwarded by the first node in the beam set.

In a possible implementation, the first indication information includes at least one of the following: identification information of at least one beam in the beam set and a sending periodicity of the beam set.

In another possible implementation, the first indication information includes at least one of the following: identification information of a first beam in the beam set, identification information of at least one second beam associated with the first beam, and a sending periodicity of the beam set.

In still another possible implementation, the first indication information is carried in dedicated signaling, a radio resource control message, downlink control information, or a media access control control element.

In still another possible implementation, the sending periodicity of the beam set is carried in system information.

In still another possible implementation, the first indication information further includes one or more of the following: a quantity of beams that need to be forwarded by the first node in the beam set and first duration information, where the first duration information indicates duration for which the first node forwards the at least one beam that needs to be forwarded by the first node.

In still another possible implementation, the first indication information includes one or more of the following: a first bitmap and second indication information, where the first bitmap indicates identification information and time information of a beam that needs to be forwarded by the first node in the beam set, and the second indication information indicates whether the first node temporally and continuously forwards the at least one beam that needs to be forwarded by the first node.

In still another possible implementation, a value of a K^{th} bit in the first bitmap being a first preset value indicates that an index of the beam that needs to be forwarded by the first node in the beam set is K or K-1, where K is an integer.

It should be noted that, for implementations and beneficial effects of the operations, refer to corresponding descriptions in the method embodiment shown in FIG. 6.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state disk. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in the different embodiments may be combined based on an internal logical relationship thereof, to form a new embodiment.

In the descriptions of this application, terms such as "first", "second", "S601", or "S602" are used merely for distinguishing between descriptions and conveniently describing the context. Different sequence numbers have no specific technical meaning, and cannot be understood as an indication or implication of relative importance, or an indication or implication of an execution sequence of operations. The execution sequence of each process should be determined based on functions and internal logic of the processes.

The term "and/or" in this application describes merely an association relationship between associated objects and represents that three relationships may exist. For example, "A and/or B" may represent the following three cases: Only A exists; both A and B exist; and only B exists. A and B may be singular or plural. In addition, the character "/" in this specification represents an "or" relationship between the associated objects.

In this application, "transmission" may include the following three cases: data sending, data receiving, or data sending and data receiving. In this application, "data" may include service data and/or signaling data.

In this application, the terms "include" or "have" and any variation thereof are intended to cover non-exclusive inclusion. For example, a process/method that includes a series of steps, or a system/product/device that includes a series of units is not necessarily limited to those expressly listed steps or units, but may include other steps or units not explicitly listed or inherent to these processes/methods/products/devices.

In descriptions of this application, unless otherwise specified, a quantity of nouns represent "a singular noun or a plural noun", that is, "one or more". "At least one" represents one or more. "At least one of the following: A, B, and C is included" may represent that A is included, B is included, C is included, A and B are included, A and C are included, B and C are included, or A, B and C are included, where A, B, and C may be in a singular form or a plural form.

## Claims

1. A communication method, comprising:
receiving, by a first node, a beam set and first indication information from a second node, wherein the beam set comprises at least one beam;
determining, by the first node based on the first indication information, identification information of at least one beam that needs to be forwarded by the first node in the beam set; and
forwarding, by the first node based on the identification information of the at least one beam that needs to be forwarded by the first node in the beam set and receiving time information of the at least one beam that needs to be forwarded by the first node, the at least one beam that needs to be forwarded by the first node.

2. The method according to claim 1, wherein the forwarding, by the first node based on the identification information of the at least one beam that needs to be forwarded by the first node in the beam set and receiving time information of the at least one beam that needs to be forwarded by the first node, the at least one beam that needs to be forwarded by the first node comprises:
determining, by the first node, a forwarding time location based on the identification information of the at least one beam that needs to be forwarded by the first node in the beam set and the receiving time information of the at least one beam that needs to be forwarded by the first node; and
forwarding, by the first node at the forwarding time location, the at least one beam that needs to be forwarded by the first node.

3. The method according to claim 2, wherein the receiving time information comprises a frame number, a quantity of slots, and a starting orthogonal frequency division multiplexing symbol location.

4. The method according to any one of claims 1 to 3, wherein
the first indication information comprises at least one of the following: identification information of at least one beam in the beam set and a sending periodicity of the beam set.

5. The method according to any one of claims 1 to 3, wherein
the first indication information comprises at least one of the following: identification information of a first beam in the beam set, identification information of at least one second beam associated with the first beam, and a sending periodicity of the beam set.

6. The method according to claim 4 or 5, wherein the first indication information is carried in dedicated signaling, a radio resource control RRC message, downlink control information DCI, or a media access control MAC control element CE.

7. The method according to claim 4 or 5, wherein the sending periodicity of the beam set is carried in system information SI.

8. The method according to claim 7, wherein
the identification information of the at least one second beam associated with the first beam is carried in the system information SI.

9. The method according to claim 5, wherein the first indication information further comprises one or more of the following: a quantity of beams that need to be forwarded by the first node in the beam set and first duration information, wherein the first duration information indicates duration for which the first node forwards the at least one beam that needs to be forwarded by the first node.

10. The method according to any one of claims 1 to 3, wherein the first indication information comprises one or more of the following: a first bitmap and second indication information, the first bitmap indicates identification information and time information of a beam that needs to be forwarded by the first node in the beam set, and the second indication information indicates whether the first node temporally and continuously forwards the at least one beam that needs to be forwarded by the first node.

11. The method according to claim 10, wherein a value of a K^{th} bit in the first bitmap being a first preset value indicates that an index of the beam that needs to be forwarded by the first node in the beam set is K or K-1, wherein K is an integer.

12. The method according to claim 11, wherein one bit in the first bitmap corresponds to one unit time interval or time location; and
when the value of the K^{th} bit in the first bitmap is the first preset value, forwarding, by the first node at one unit time interval or time location corresponding to the K^{th} bit, the beam whose index is K or K-1 in the beam set.

13. A communication method, comprising:
generating, by a second node, a beam set and first indication information, wherein the beam set comprises at least one beam; and
sending, by the second node, the beam set and the first indication information to a first node, wherein the first indication information is used to determine identification information of at least one beam that needs to be forwarded by the first node in the beam set.

14. The method according to claim 13, wherein
the first indication information comprises at least one of the following: identification information of at least one beam in the beam set and a sending periodicity of the beam set.

15. The method according to claim 13, wherein
the first indication information comprises at least one of the following: identification information of a first beam in the beam set, identification information of at least one second beam associated with the first beam, and a sending periodicity of the beam set.

16. The method according to claim 14 or 15, wherein the first indication information is carried in dedicated signaling, a radio resource control RRC message, downlink control information DCI, or a media access control MAC control element CE.

17. The method according to claim 14 or 15, wherein the sending periodicity of the beam set is carried in system information SI.

18. The method according to claim 17, wherein
the identification information of the at least one second beam associated with the first beam is carried in the system information SI.

19. The method according to claim 15, wherein the first indication information further comprises one or more of the following: a quantity of beams that need to be forwarded by the first node in the beam set and first duration information, wherein the first duration information indicates duration for which the first node forwards the at least one beam that needs to be forwarded by the first node.

20. The method according to claim 13, wherein the first indication information comprises one or more of the following: a first bitmap and second indication information, the first bitmap indicates identification information and time information of a beam that needs to be forwarded by the first node in the beam set, and the second indication information indicates whether the first node temporally and continuously forwards the at least one beam that needs to be forwarded by the first node.

21. The method according to claim 20, wherein a value of a K^{th} bit in the first bitmap being a first preset value indicates that an index of the beam that needs to be forwarded by the first node in the beam set is K or K-1, wherein K is an integer.

22. A communication apparatus, comprising a processing unit and a communication unit, wherein
the communication unit is configured to receive a beam set and first indication information from a second node, wherein the beam set comprises at least one beam;
the processing unit is configured to determine, based on the first indication information, identification information of at least one beam that needs to be forwarded by the apparatus in the beam set; and
the processing unit is configured to forward, based on the identification information of the at least one beam that needs to be forwarded by the apparatus in the beam set and receiving time information of the at least one beam that needs to be forwarded by the apparatus, the at least one beam that needs to be forwarded by the apparatus.

23. The apparatus according to claim 22, wherein
the processing unit is configured to determine a forwarding time location based on the identification information of the at least one beam that needs to be forwarded by the apparatus in the beam set and the receiving time information of the at least one beam that needs to be forwarded by the apparatus; and forward, at the forwarding time location, the at least one beam that needs to be forwarded by the apparatus.

24. The apparatus according to claim 23, wherein the receiving time information comprises a frame number, a quantity of slots, and a starting orthogonal frequency division multiplexing symbol location.

25. The apparatus according to any one of claims 22 to 24, wherein the first indication information comprises at least one of the following: identification information of at least one beam in the beam set and a sending periodicity of the beam set.

26. The apparatus according to any one of claims 22 to 24, wherein the first indication information comprises at least one of the following: identification information of a first beam in the beam set, identification information of at least one second beam associated with the first beam, and a sending periodicity of the beam set.

27. The apparatus according to claim 25 or 26, wherein the first indication information is carried in dedicated signaling, a radio resource control RRC message, downlink control information DCI, or a media access control MAC control element CE.

28. The apparatus according to claim 25 or 26, wherein the sending periodicity of the beam set is carried in system information SI.

29. The apparatus according to claim 28, wherein the identification information of the at least one second beam associated with the first beam is carried in the system information SI.

30. The apparatus according to claim 26, wherein the first indication information further comprises one or more of the following: a quantity of beams that need to be forwarded by the apparatus in the beam set and first duration information, wherein the first duration information indicates duration for which the apparatus forwards the at least one beam that needs to be forwarded by the apparatus.

31. The apparatus according to any one of claims 22 to 24, wherein the first indication information comprises one or more of the following: a first bitmap and second indication information, the first bitmap indicates identification information and time information of a beam that needs to be forwarded by the apparatus in the beam set, and the second indication information indicates whether the apparatus temporally and continuously forwards the at least one beam that needs to be forwarded by the apparatus.

32. The apparatus according to claim 31, wherein a value of a K^{th} bit in the first bitmap being a first preset value indicates that an index of the beam that needs to be forwarded by the apparatus in the beam set is K or K-1, wherein K is an integer.

33. The apparatus according to claim 32, wherein one bit in the first bitmap corresponds to one unit time interval or time location, and the processing unit is configured to: when the value of the K^{th} bit in the first bitmap is the first preset value, forward, at one unit time interval or time location corresponding to the K^{th} bit, the beam whose index is K or K-1 in the beam set.

34. A communication apparatus, comprising:
a processing unit, configured to generate a beam set and first indication information, wherein the beam set comprises at least one beam; and
a communication unit, configured to send the beam set and the first indication information to a first node, wherein the first indication information is used to determine identification information of at least one beam that needs to be forwarded by the first node in the beam set.

35. The apparatus according to claim 34, wherein the first indication information comprises at least one of the following: identification information of at least one beam in the beam set and a sending periodicity of the beam set.

36. The apparatus according to claim 34, wherein the first indication information comprises at least one of the following: identification information of a first beam in the beam set, identification information of at least one second beam associated with the first beam, and a sending periodicity of the beam set.

37. The apparatus according to claim 35 or 36, wherein the first indication information is carried in dedicated signaling, a radio resource control RRC message, downlink control information DCI, or a media access control MAC control element CE.

38. The apparatus according to claim 35 or 36, wherein the sending periodicity of the beam set is carried in system information SI.

39. The apparatus according to claim 38, wherein
the identification information of the at least one second beam associated with the first beam is carried in the system information SI.

40. The apparatus according to claim 36, wherein the first indication information further comprises one or more of the following: a quantity of beams that need to be forwarded by the first node in the beam set and first duration information, wherein the first duration information indicates duration for which the first node forwards the at least one beam that needs to be forwarded by the first node.

41. The apparatus according to claim 34, wherein the first indication information comprises one or more of the following: a first bitmap and second indication information, the first bitmap indicates identification information and time information of a beam that needs to be forwarded by the first node in the beam set, and the second indication information indicates whether the first node temporally and continuously forwards the at least one beam that needs to be forwarded by the first node.

42. The apparatus according to claim 41, wherein a value of a K^{th} bit in the first bitmap being a first preset value indicates that an index of the beam that needs to be forwarded by the first node in the beam set is K or K-1, wherein K is an integer.

43. A communication apparatus, wherein the apparatus comprises at least one processor and a communication interface, and the at least one processor invokes a computer program or instructions stored in a memory to perform the method according to claims 1 to 12.

44. A communication apparatus, wherein the apparatus comprises at least one processor and a communication interface, and the at least one processor invokes a computer program or instructions stored in a memory to perform the method according to claims 13 to 21.

45. A communication system, wherein the system comprises the apparatus according to claim 43 and the apparatus according to claim 44.

46. A computer-readable storage medium, wherein the computer-readable storage medium stores instructions, and when the instructions are run on a processor, the method according to any one of claims 1 to 21 is implemented.

47. A computer program product, wherein the computer program product comprises computer program code, and when the computer program code is run on a computer, the method according to any one of claims 1 to 21 is implemented.
